# EUROPEAN PATENT APPLICATION

(11) **EP 3 690 097 A1**
(43) Date of publication of application: **05.08.2020**
(21) Application number: 18862378.9
(22) Date of filing: 27.09.2018
(51) Int. Cl.: D05C 17/00, B60R 13/02, D02G 3/12, D02G 3/28, D02G 3/44

(54) **CONDUCTIVE EMBROIDERY THREAD, CONDUCTIVE EMBROIDERY FABRIC USING SAME, AND USE OF CONDUCTIVE EMBROIDERY FABRIC**

(30) Priority: 29.09.2017 KR 20170127341; 29.09.2017 KR 20170127342
(71) Applicant: Dual Co., Ltd., Seoul 06173 (KR)
(72) Inventor: GWON, Jeom Soon, Siheung-si Gyeonggi-do 15044 (KR)
(74) Representative: Jordan, Volker Otto Wilhelm
(86) International application number: PCT/KR2018/011395
(87) International publication number: WO 2019/066474

(57) **Abstract**

A conductive embroidery thread, a conductive embroidery fabric using the same and use of the conductive embroidery fabric are provided. The conductive embroidery thread of high embroidery quality is without thread tangles and breaks by plying and twisting conductive threads together at 600 or less turns per 1M to satisfy the strength and elongation requirements suitable for embroidery process application. The conductive embroidery fabric has lightweight and high sensibility advantages by embroidering a skin layer fabric using the conductive embroidery thread at optimal embroidery density and embroidery speed. The conductive embroidery thread and fabric made therefrom may be used for a fiber type electrical and electronic device useful for an automotive interior touch sensor and an automotive interior material.

## Description

### [Technical Field]

The present disclosure relates to a conductive embroidery thread, a conductive embroidery fabric using the same and use of the conductive embroidery fabric, and more particularly, to a conductive embroidery thread with high embroidery quality which does not cause thread tangles and breaks by plying and twisting conductive threads together at 600 or less turns per 1M to satisfy the strength and elongation suitable for embroidery process application and to a conductive embroidery fabric having an embroidery pattern formed by embroidering a skin layer fabric using the conductive embroidery thread at optimal embroidery density and speed and its use.

### [Background Art]

Embroidery uses a backing paper to embroider and two types of threads. One type of thread is an embroidery thread used to create a pattern, and the other type of thread is a shuttle thread that is wound on a small bobbin and put in a shuttle. The shuttle thread is disposed behind the backing paper to hold the embroidery thread going down through the backing paper.

An embroidery needle is similar to a sewing machine needle, and the needle inserts the embroidery thread through the backing paper by upward and downward movements at the same location. In this instance, the backing paper is moved to the left and right by the Jacquard machine according to the pattern to be created.

An automatic embroidery machine not only embroiders using a punch card, but also automatically controls hole boring and hole stitching.

In general, a process of manufacturing an embroidery thread includes a process of twisting and/or thermosetting yarns, and a conventional embroidery thread stretches to a predetermined length when pulled in a predetermined pressure. In this instance when the lengthwise stretch is so much and the pulling pressure is released, the thread becomes tangled and is difficult to use.

Recently, there is a growing interest in the fiber field in smart fibers that sense and respond to external environments and stimuli. To this end, the fiber itself needs to conduct electricity to receive an external electrical signal and react to the signal.

That is, opposite to the conventional fibers, the smart fiber is conductive to allow electricity to flow in the fiber, and nanomaterials or electrical materials such as copper, silver, carbon and graphite may be used as the materials of the smart fibers in the upcoming future.

Conductive fibers have developed steadily, but when repeatedly stretched and contracted, they are apt to lose the electrical properties and easily destroyed.

In particular, there is little or no attempt to apply conductive threads for embroidery uses. Since conductive embroidery threads have a higher flexural modulus and lower elongation than general embroidery threads, when applied to an embroidery process, threads tangle and break, resulting in low embroidery quality.

Korean Patent No. 1015563 provides an electrically conductive metal composite embroidery thread for smart textiles that can be used as a power supply and signal transmission lines, and an embroidered circuit comprising a metal composite embroidery thread and a nonconductive fabric in which a circuit is formed in an embroidery form by embroidering on the nonconductive fabric using the electrically conductive metal composite embroidery thread.

However, the metal composite embroidery thread used in the above patent is manufactured by covering a metal filament thread on the surface of a fiber thread having the thickness of 50-300 denier, and twisting the threads to the right and left at multiple turns, and thus the thread fed into the embroidery machine is so thick that it is not suitable for embroidery uses, and when applied to an embroidery process, thread tangle and break phenomena are not resolved.

Additionally, Korean Patent No. 1197792 addresses the problem of conventional embroidery thread which stretches to a predetermined length when pulled in a predetermined pressure, when the lengthwise stretch is so much and the pulling pressure is released, the thread becomes tangled and is difficult to use. To solve the problem, there is provided a metallic thread manufactured by twisting a yarn in a predetermined direction and a metallic yarn in a different direction, to prevent the thread from stretching when pulled, for use as embroidery threads and threads for manufacturing fabric.

This patent provides the metallic thread manufactured by twisting the yarn at 900-1100 turns per 1M in a direction and the metallic yarn over the circumference of the yarn at 1100-1300 turns in a different direction, and thus it can solve the thread tangle problem. However, the twists of the metallic thread bulge out when fed into the embroidery machine and the metallic thread may untwist, and there is no consideration of the suitable properties of the thread, such as thickness, strength and elongation, for application to the embroidery machine.

Accordingly, development of conductive threads satisfying the strength and elongation requirements suitable for embroidery process application is advantageous in forming electronic circuit patterns, and it is possible to apply them to free curves on a large scale at a low cost, thereby providing added value in vehicles as well as a variety of other fiber industrial fields.

Nevertheless, there is little or no report about the application of conductive fiber materials to automotive door trims.

The automotive door trim is an interior finishing component on the inside of the door and occupies the second widest part of the vehicle. In the early stage, automotive door trims were simple interior materials manufactured by covering a flat hardboard with a polyvinyl chloride foam sheet, fixing a finishing sheet to the rear surface of the hardboard with staples, and forming a design pattern on the surface by high frequency welding. But as resin forming technology advanced, it is now possible to provide from trim pads with simple designs by forming a pressboard to complex shapes integrally formed by resin injection such as door armrests or door pull handles.

Additionally, skin materials are applied to the surface of the automotive door trim panel to provide luxurious images and soft touch to the vehicle interior so as to provide passengers with a more comfortable atmosphere. In this instance, for the skin of the door trim panel, sheets made of polyvinyl chloride (PVC) resin or a PVC resin/ABS resin mixture have been commonly used, but recently, keeping up with luxury trends in automotive interior materials, there are commercially available door trims in which real stitches are made on the skin.

In this context, with the inventor's effort to solve the conventional problems, the inventor has completed the present disclosure to provide a conductive embroidery thread in which conductive threads are plied and twisted at optimal number of strands and number of turns to achieve high embroidery quality without thread tangles and breaks in the embroidery process application, a conductive embroidery fabric having an embroidery pattern formed on a skin layer of fabric using the conductive embroidery thread, and an automotive interior material formed in a manner of being covered with the conductive embroidery fabric such that the electrode pattern is exposed to the front surface of the skin layer fabric.

### [Disclosure]

### [Technical Problem]

The present disclosure is directed to providing a conductive embroidery thread of improved embroidery quality without thread tangles and breaks.

The present disclosure is further directed to providing a conductive embroidery fabric embroidered using the conductive embroidery thread.

The present disclosure is further directed to providing use of the conductive embroidery fabric.

### [Technical Solution]

To achieve the above-described object, the present disclosure provides a conductive embroidery thread comprising 2 to 4 strands of the conductive thread plied and twisted together in a direction at 600 or less turns per 1M.

In this instance, based on the embroidery quality evaluation as to whether thread tangle and break occurred in the embroidery process, fineness of a single strand of the conductive thread is 30 to 100 denier, and fineness of the conductive thread after plying together threads of a same denier or threads of different deniers is controlled to 200 or less denier.

The conductive thread may use any one selected from the group consisting of a conductive thread manufactured by plying and twisting or spinning an insulating thread and a metallic thread; a conductive thread of a composite material manufactured by mixing with conductive particles in a spinning process; and a conductive thread manufactured by plating an insulating thread with metal.

The present disclosure provides a conductive embroidery fabric having an embroidery pattern formed by an embroidery process performed on a skin layer fabric using the conductive embroidery thread at the requirements of an embroidery density of 3 to 7 line/mm and an embroidery speed of 300 rpm or less.

In this instance, the embroidery pattern is preferably 10 mm or more in horizontal and vertical lengths.

Additionally, in the conductive embroidery fabric, the embroidery pattern is selected from the group consisting of a symbol pattern including up, down, left and right arrows; a letter pattern including Korean or Roman alphabet letters; and a figure pattern including a circle, a triangle and a rhombus, alone or in combination.

Further, the present disclosure uses the conductive embroidery fabric, and may be usefully applied as a fiber type device in a variety of industrial fields including an automotive interior touch sensor.

Specifically, the present disclosure provides a fiber type electrical and electronic device that is applied to any one selected from the group of electrical and electronic devices consisting of an automotive interior touch sensor, a pressure sensitive manipulation device, a power transmission circuit and a signal processing circuit.

Additionally, the present disclosure provides an automotive interior material using the conductive embroidery fabric, formed in a manner of being covered such that an electrode pattern is exposed to a front surface of the skin layer fabric.

### [Advantageous Effects]

According to the present disclosure, it is possible to provide a conductive embroidery thread of high embroidery quality without thread tangles and breaks in embroidery application by plying and twisting conductive threads together.

Furthermore, the present disclosure may provide a conductive embroidery fabric that is economically efficient to produce by using the existing embroidery process equipment and has the advantages of being lightweight and having high sensibility by optimizing the embroidery density and the embroidery speed.

Further, the present disclosure may use the conductive embroidery fabric as fiber type electrical and electronic devices in a variety of industrial fields including automotive interior touch sensors.

In addition, the present disclosure provides an automotive interior material using the conductive embroidery fabric, which makes it possible to spatially distribute many automotive manipulation devices arranged on the center fascia ahead of the driver's seat or to install additional automotive manipulation devices, thereby overcoming the space limitation.

Accordingly, it is possible to increase the product competiveness by applying a new concept sensible automotive controller to a space having less controller placement due to the material problem and other technical problems.

Moreover, as an electrode pattern formed using the automotive conductive embroidery thread of the present disclosure is easily formed by an embroidery process, multimedia (audio, video, TV), navigation manipulation, seat position manipulation and vehicle window manipulation may be performed over the entire space of the vehicle.

### [Description of Drawings]

FIG. 1 shows each process step of the processing of a conductive embroidery thread of the present disclosure.
FIG. 2 is a diagram of an embodiment of a two-ply conductive embroidery thread of the present disclosure.
FIG. 3 shows thread tangle and break phenomena as quantitative evaluation standards for the properties of a conductive embroidery thread of the present disclosure.
FIG. 4 shows a process of manufacturing a conductive embroidery fabric by applying a conductive embroidery thread of the present disclosure to an embroidery process.
FIG. 5 shows a conductive embroidery fabric completed by the manufacturing process of FIG. 4.
FIG. 6 shows embroidery quality versus embroidery size in the process of manufacturing a conductive embroidery fabric of the present disclosure.
FIG. 7 shows the definition of embroidery density in the process of manufacturing a conductive embroidery fabric of the present disclosure.
FIG. 8 is an actual photographic image of an automotive door trim using a conductive embroidery fabric of the present disclosure.
FIG. 9 is an enlarged photographic image of an electrode pattern formed by embroidering the conductive embroidery fabric of FIG. 8 using a conductive embroidery thread.

### [Best Mode]

Hereinafter, the present disclosure will be described in detail.

The present disclosure provides a conductive embroidery thread satisfying the predetermined strength and elongation of the thread required for embroidery process application in which the conductive embroidery thread is manufactured by plying and twisting two to four strands of a conductive thread together in a direction at 600 or less turns per 1M.

In this instance, the conductive thread may include any one selected from the group consisting of a conductive thread manufactured by plying and twisting or spinning an insulating thread and a metallic thread; a conductive thread of a composite material manufactured by mixing with conductive particles in a spinning process; and a conductive thread manufactured by plating an insulating thread with metal.

The conductive thread used in the present disclosure may be manufactured by well-known methods, or commercially available products may be used.

In a more preferred example, an embodiment of the present disclosure is described using a conductive thread manufactured by plating an insulating thread with metal (hereinafter referred to as a metal plated thread), but is not limited thereto. In this instance, the metal plated thread uses a commercially available product plated with a conducting metal component such as silver and copper by an electroplating method.

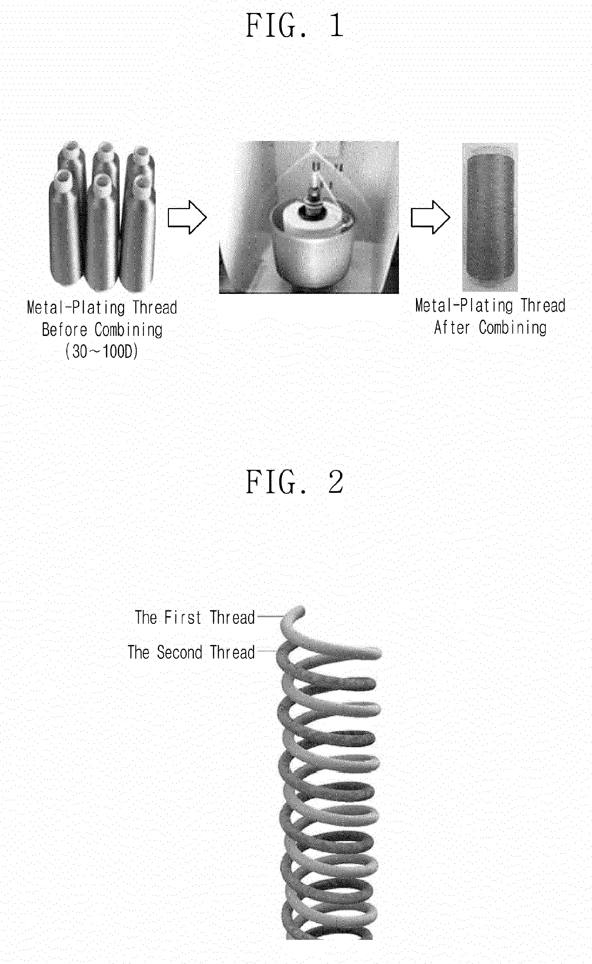

FIG. 1 shows each process step of the processing the conductive embroidery thread of the present disclosure, and FIG. 2 is a diagram of an embodiment of a two-ply conductive embroidery thread of the present disclosure.

Additionally, the present disclosure may obtain the conductive embroidery thread with improved embroidery quality that satisfies the strength and elongation of the thread required for embroidery process application, and of which the embroidery quality is evaluated according to whether or not thread tangles and breaks occurred after passing through the embroidery machine. That is, the conductive embroidery thread of the present disclosure is optimized to the number of strands of the thread and the number of turns within the requirements in which thread tangle and break phenomena is not observed after the embroidery machine work.

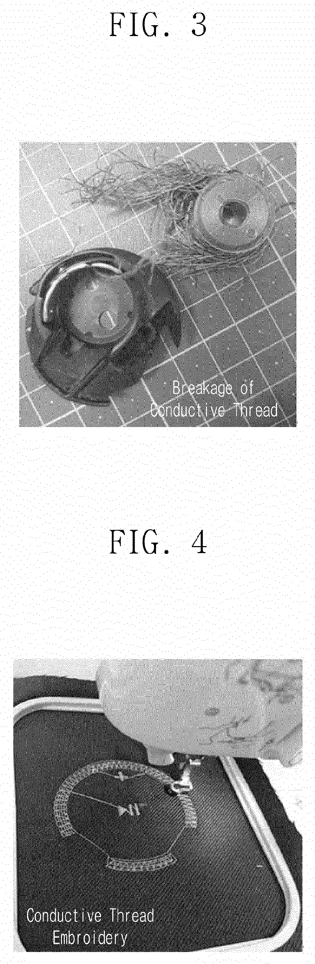

In this instance, FIG. 3 shows the thread tangle and break phenomena as the quantitative evaluation standards for the properties of the conductive embroidery thread of the present disclosure.

As the conductive embroidery thread of the present disclosure is manufactured by plying the conductive threads of the same material together, it is advantageous in improving the conductivity efficiency, and in this instance, the fineness of a single strand of the conductive thread is 30 to 100 denier, more preferably 30 to 70 denier.

The fineness after plying together the conductive threads of the same denier or different deniers is 200 denier, preferably 150 denier or less, and in this instance, when the fineness of the plied thread exceeds 200 denier, it is undesirable since the thread fed to the embroidery machine is too thick, causing a problem when feeding to a feeder and threading an embroidery needle.

The number of strands of the conductive thread is preferably two to four strands, and a two-ply is more preferred. Additionally, when the number of turns (TM) satisfies 600 or less per 1M, preferably 300 to 600, more preferably 550 to 600 upon feeding into the embroidery machine, it is possible to prevent the thread tangles and breaks presented in FIG. 3.

In this instance, when the optimized number of strands and number of turns are determined, plying and twisting is accomplished by performing a twisting process in one direction at the twisting speed ranging between 9,000 and 10,000 rpm.

The present disclosure provides a conductive embroidery fabric having an embroidery pattern formed by embroidering a skin layer fabric using the conductive embroidery thread at the requirements of the embroidery density of 3 to 7 line/mm and the embroidery speed of 300 rpm or less.

The skin layer fabric may include a nonconductive material such as nylon, polyester, acrylic, spandex, cotton, wool and silk. The skin layer fabric is applied to any type selected from the group consisting of a woven fabric, a knit fabric including tricot and knit, a nonwoven fabric, leather and suede.

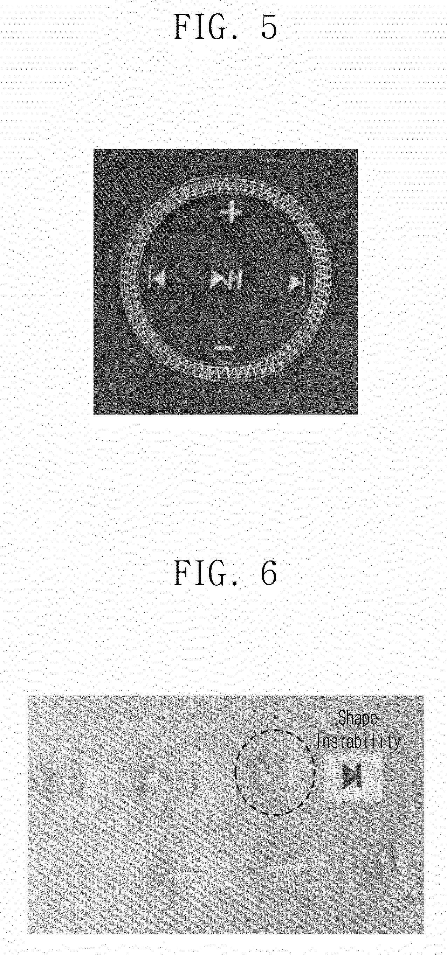

FIG. 4 shows a process of manufacturing the conductive embroidery fabric by the embroidery process using the conductive embroidery thread of the present disclosure, and FIG. 5 shows the conductive embroidery fabric completed by the manufacturing process of FIG. 4.

In this instance, the conductive embroidery fabric is affected by the size and shape of the embroidery pattern of the conductive embroidery fabric due to the operational feature of the embroidery machine in such a way that the needle penetrates the skin layer fabric by upward and downward movements at the same location.

In the conductive embroidery fabric of the present disclosure, a preferable size of the embroidery pattern is 10 mm or more in horizontal and vertical lengths, and when the embroidery pattern is less than 10 mm in size, thread tangles and breaks occur while the needle pierces repeatedly at the same location.

FIG. 6 shows embroidery quality versus embroidery size in the process of manufacturing the conductive embroidery fabric of the present disclosure, and the embroidery size is preferably at least 10 mm in horizontal and vertical dimensions, and as precision is required, embroidery size adjustment is required.

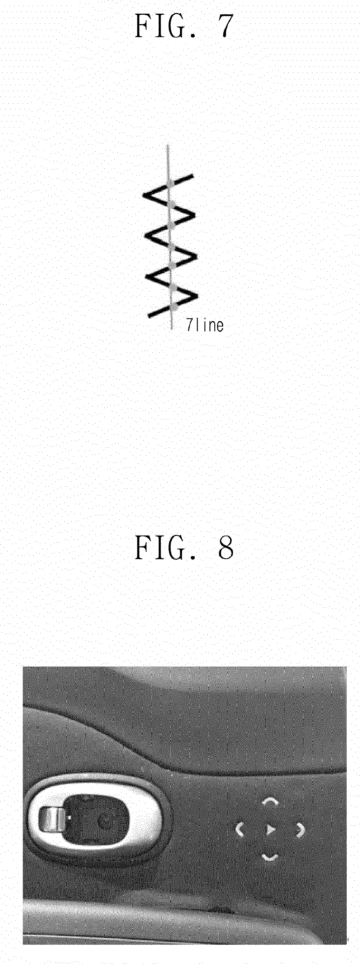

FIG. 7 shows the definition of embroidery density in the process of manufacturing the conductive embroidery fabric of the present disclosure, and the embroidery density is defined as the number of contact points with axes per 10 mm stitch width of a zigzag embroidery.

The embroidery density of the present disclosure is preferably 3 to 7 line/mm, and the embroidery speed is 300 rpm or less, and the embroidery process is performed at the above requirements. In this instance, when the embroidery density is less than 3 line/mm, it is undesirable since the contact area between threads is small, the resistance is high, and utility is low. When the embroidery density exceeds 7 line/mm, the needle interferes the previous embroidery thread, causing thread tangles.

Additionally, when the embroidery speed exceeds 300 rpm, it is undesirable since the speed of the same stitching and the thread feeding timing overlap, and a thread tangle phenomenon occurs. In an embodiment of the present disclosure, when embroidering is performed at the speed of 400 rpm, it is found that a thread tangle occurs, and the embroidery quality becomes poor.

The embroidery fabric of the present disclosure may provide the conductive embroidery fabric that is economically efficient since it can be manufactured using the existing embroidery process equipment and lightweight by controlling the embroidery density and the embroidery speed as described above, and has high sensibility.

Additionally, in the conductive embroidery fabric of the present disclosure, the embroidery pattern may include a pattern selected from a symbol pattern including up, down, left and right arrows; a letter pattern including Korean or Roman alphabet letters; a figure pattern including a circle, a triangle and a rhombus, alone or in combination, and it is possible to create a desired pattern on the skin layer fabric by the embroidery process.

Further, as the conductive embroidery thread of the present disclosure may provide an embroidery fabric having a conductive property in itself by plying and twisting the conductive threads together, it may be used as fiber type devices in a variety of industrial fields including automotive with interior touch sensors.

Specifically, by maximizing the lightweight and conductive properties, the conductive embroidery fabric may be used in the field of fiber type electrical and electronic devices including automotive with interior touch sensors as well as pressure sensitive manipulation devices, power transmission circuits and signal processing circuits.

In addition, the present disclosure provides an automotive interior material using the conductive embroidery fabric, formed in a manner of being covered such that an electrode pattern is exposed to the front surface of the skin layer fabric.

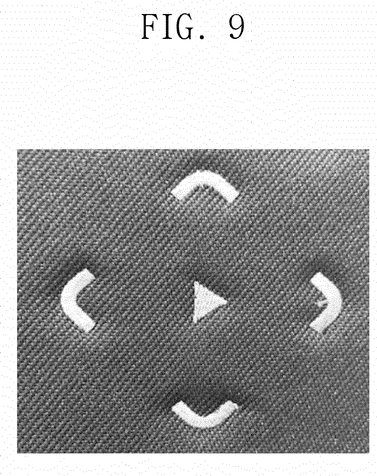

FIGS. 8 and 9 are an actual photographic image of an automotive door trim applied as the automotive interior material made of the conductive embroidery fabric of the present disclosure, and an enlarged photographic image of the electrode pattern formed by embroidering the conductive embroidery fabric using the conductive embroidery thread, respectively.

Specifically, the automotive interior material may include automotive interior materials including door trims, head linings, seat backs, console boxes and arm rests and interior materials including trunk trims, and although an embodiment of the present disclosure is described as limited to the door trim, it will be understood that the electrode pattern may be formed in the automotive interior front side parts.

Additionally, a method for providing the automotive interior material using the conductive embroidery fabric may use a process of covering the surface with the fabric or bonding fabrics and compression in a mold.

The automotive interior material has the electrode pattern formed by embroidering the conductive embroidery fabric using the conductive embroidery thread, which makes it possible to spatially distribute many automotive manipulation devices arranged on the center fascia ahead of the driver's seat or to install additional automotive manipulation devices, thereby overcoming the space limitation.

In addition, it is possible to increase the product competiveness by applying a new concept which is a sensible automotive controller to the space having less controller placement due to the material problem and other technical problems.

As the electrode pattern formed using the automotive conductive embroidery thread of the present disclosure is easily formed by the embroidery process, multimedia (audio, video, TV) and navigation manipulation, seat position manipulation and vehicle window manipulation may be performed over the entire space of the vehicle.

### [Mode for Invention]

Hereinafter, the present disclosure will be described in more detail through examples.

These examples are provided to describe the present disclosure in more detail, and the scope of the present disclosure is not limited to these examples.

### <Examples 1-5> Manufacture of conductive embroidery thread

After a conductive fabric coated with silver through an electroplating process is manufactured, the thread of the coated fabric is undone and then wound to manufacture a metal plated thread (X static, USA), which is used as a conductive thread, the fineness of a single strand of the conductive thread is selected as one of 30D and 70D, the number of strands and the number of turns are set, and the conductive thread is fed into an embroidery machine (Brother Sewing Machine Innovis NV-950) and plied and twisted together at the speed of 10,000 rpm for the application to an embroidery process. In this instance, an electrical resistance value of the conductive thread is 0.079 to 0.098 Ω/cm.

In this instance, whether thread tangle and break occurred after plying as presented in FIG. 3 is observed, and a conductive embroidery thread is optimized to an embroidery quality in which thread tangle and break do not occur.

### <Experimental example 1> Evaluation of properties versus the number of strands of conductive thread and the number of turns

For the conductive threads of fineness 30D and 70D, the properties of the conductive embroidery threads are evaluated based on the conditions for plying.

In this instance, the quantitative evaluation standards for the strength and elongation properties of the conductive thread are the presence or absence of thread tangles and breaks determined with an eye as presented in FIG. 3.

**[Table 1]**

| Classification | Fineness | Number of strands | Number of turns (TM) | Thread tangle and break |
|---|---|---|---|---|
| Example 1 | 30D | Two-ply | 560 | No thread tangle and break |
| Example 2 | 30D | Two-ply | 580 | No thread tangle and break |
| Example 3 | 70D | Two-ply | 560 | No thread tangle and break |
| Example 4 | 70D | Two-ply | 580 | No thread tangle and break |
| Example 5 | 30D + 70D | Two-ply | 560 | No thread tangle and break |
| Comparative example 1 | 30D | Three-ply | 200 | Tangled and broken thread |
| Comparative example 2 | 30D | Two-ply | 620 | Tangled and broken thread |
| Comparative example 3 | 30D | Single ply | - | Tangled and broken thread |
| Comparative example 4 | 30D | Five-ply | 560 | Tangled and broken thread |
| Comparative example 5 | 70D | Three-ply | 560 | Tangled and broken thread |
| Comparative example 6 | 70D | Two-ply | 620 | Tangled and broken thread |
| Comparative example 7 | 70D | Single ply | - | Tangled and broken thread |
| Comparative example 8 | 70D | Five-ply | 560 | Tangled and broken thread |

### <Examples 6-10> Manufacture of conductive embroidery fabric using conductive embroidery thread

A conductive embroidery fabric is manufactured by performing an embroidery process on a polyester substrate using the conductive embroidery thread manufactured in example 1, the properties are evaluated with varying embroidery densities and embroidery speed in the process and device sizes and the results are shown in Tables 2 to 4.

### <Experimental example 2> Evaluation of properties of conductive embroidery fabric based on embroidery process

In the embroidery process of the manufactured conductive embroidery fabric, the properties are evaluated based on the conditions for embroidery density and embroidery speed and the pattern size of the embroidery fabric.

### 1. Evaluation of properties versus embroidery density

As defined in FIG. 7, with varying embroidery densities of 2 to 10 line/mm, the properties are evaluated by determining whether thread tangle and break presented in FIG. 3 occurred.

**[Table 2]**

| Classification | Embroidery density (line/mm) | Thread tangle and break |
|---|---|---|
| Comparative example 9 | 2 | Low embroidery quality, high resistance |
| Example 6 | 3 | No thread tangle and break |
| Example 7 | 4 | No thread tangle and break |
| Example 8 | 5 | No thread tangle and break |
| Example 9 | 6 | No thread tangle and break |
| Example 10 | 7 | No thread tangle and break |
| Comparative example 10 | 8 | Tangled and broken thread |
| Comparative example 11 | 9 | Tangled and broken thread |
| Comparative example 12 | 10 | Tangled and broken thread |

### 2. Evaluation of properties versus embroidery speed

In the embroidery process using the conductive embroidery thread manufactured in example 1 at the embroidery density of 6 line/mm, the embroidery process is performed under the following conditions to evaluate the influence of each embroidery speed.

**[Table 3]**

| Classification | Embroidery density (line/mm) | Embroidery speed (rpm) | Thread tangle and break |
|---|---|---|---|
| Example 9 | 6 | 200 | No thread tangle and break |
| | 6 | 300 | No thread tangle and break |
| Comparative example 13 | 6 | 400 | Tangled and broken thread |
| | 6 | 500 | Tangled thread |

### 3. Evaluation of properties versus pattern size of embroidery fabric

When manufacturing a fiber type device by performing the embroidery process using the conductive embroidery thread manufactured in example 1 at the embroidery density of 6 line/mm, the embroidery process is performed under the following conditions to evaluate the influence of each device size (horizontal and vertical lengths).

**[Table 4]**

| Classification | Embroidery density (line/mm) | Device size (mm) | Thread tangle and break |
|---|---|---|---|
| Comparative example 13 | 6 | 4 | Tangled and broken thread |
| | 6 | 6 | Tangled and broken thread |
| | 6 | 8 | Tangled and broken thread |
| Example 9 | 6 | 10 | No thread tangle and break |
| | 6 | 12 | No thread tangle and break |
| | 6 | 14 | No thread tangle and break |
| | 6 | 16 | No thread tangle and break |

### [industrial Applicability]

As described above, the present disclosure provides a conductive embroidery thread of high embroidery quality without thread tangles and breaks in embroidery application by plying and twisting conductive threads together.

The present disclosure provides a conductive embroidery fabric that is economically efficient since the conductive embroidery thread is manufactured using the existing embroidery process equipment and has advantages of being lightweight and having high sensibility by optimizing the embroidery density and the embroidery speed.

Further, the present disclosure may be used in the field of fiber type electrical and electronic devices including automotive interior with touch sensors as well as pressure sensitive manipulation devices, power transmission circuits and signal processing circuits, by maximizing the lightweight and conductive properties of the conductive embroidery fabric.

In addition, the present disclosure provides the automotive interior material using the conductive embroidery fabric having the embroidery pattern, which makes it possible to spatially distribute many automotive manipulation devices arranged on the center fascia ahead of the driver's seat or to install additional automotive manipulation devices, thereby overcoming the space limitation.

While the present disclosure has been described in detail with regard to the disclosed embodiments, it will be obvious to those skilled in the art that various modifications and changes may be made thereto within the scope of the present disclosure, and such modifications and changes will fall in the appended claims.

## Claims

1. A conductive embroidery thread comprising 2 to 4 strands of a conductive thread plied and twisted together in a direction at 600 or less turns per 1M.

2. The conductive embroidery thread of claim 1, wherein fineness of a single strand of the conductive thread is 30 to 100 deniers.

3. The conductive embroidery thread of claim 1, wherein fineness of the conductive thread after plying together threads of a same denier or threads of different deniers is 200 denier or less.

4. The conductive embroidery thread of claim 1, wherein the conductive thread is any one selected from the group consisting of a conductive thread manufactured by plying and twisting or spinning an insulating thread and a metallic thread; a conductive thread of a composite material manufactured by mixing with conductive particles in a spinning process; and a conductive thread manufactured by plating an insulating thread with metal.

5. A conductive embroidery fabric having an embroidery pattern defined on a skin layer fabric at an embroidery density of 3 to 7 line/mm and an embroidery speed of 300 rpm or less using the conductive embroidery thread of claim 1.

6. The conductive embroidery fabric of claim 5, wherein the embroidery pattern of the conductive embroidery fabric is 10 mm or more in width and length.

7. The conductive embroidery fabric of claim 5, wherein the embroidery pattern is selected from the group consisting of a symbol pattern including up, down, left and right arrows; a letter pattern including Korean or Roman alphabet letters; and a figure pattern including a circle, a triangle and a rhombus, alone or in combination.

8. A fiber type electrical and electronic device using the conductive embroidery fabric of claim 5, wherein the conductive embroidery fabric is applied to any one selected from the group consisting of an automotive interior touch sensor, a pressure sensitive manipulation device, a power transmission circuit, and a signal processing circuit.

9. An automotive interior material using the conductive embroidery fabric of claim 5, wherein the conductive embroidery fabric is applied in a manner of being covered and an electrode pattern is exposed to a front surface of the skin layer fabric.
